# EUROPEAN PATENT APPLICATION

(11) **EP 4 246 344 A1**
(43) Date of publication of application: **20.09.2023**
(21) Application number: 22198809.0
(22) Date of filing: 29.09.2022
(51) Int. Cl.: G06F 16/93, G06Q 10/10, G06Q 30/04

(54) **INFORMATION PROCESSING DEVICE, INFORMATION PROCESSING METHOD, AND PROGRAM**

(30) Priority: 15.03.2022 JP 2022040711
(71) Applicant: Fujifilm Business Innovation Corp., Tokyo 107-0052 (JP)
(72) Inventor: NISHIOKA, Shintaro, Yokohama (JP)
(74) Representative: Meissner Bolte Partnerschaft mbB

(57) **Abstract**

An information processing device includes a processor configured to: acquire a read image; extract items from the acquired read image through character recognition, the items including a documentary item to be treated as a search condition according to the Electronic Books and Documents Preservation Act; and control a display of a screen indicating corresponding items for confirming the extracted items such that the documentary item is distinguishable from an other item, that is, an item other than the documentary item among the corresponding items.

## Description

### Background

### (i) Technical Field

The present disclosure relates to an information processing device, an information processing method, and a program.

### (ii) Related Art

For example, Japanese Patent No. 5168706 discloses an automatic definition system that automatically defines data search item information for forms in an electronic form system, the automatic definition system for data search item information being provided with: a means for inputting form data that serves as the original data of a form and format data including the data type and position information about each item in the form; a means for generating, from the inputted form data and format data, a general-purpose electronic document file that does not contain the data type and position information about each item in the form; a means for accepting the general-purpose electronic document file and the format data as input, creating, from the data, searchable form data in a format allowing the form to be searched while retaining the layout of the form, and registering the created searchable form data in a form database; and a means for analyzing format data, extracting the data type and position information about the items to be searched, and registering the extracted data type and position information in a search information database as data search item information to enable searching that is aware of the layout of the form and the data types of the items in the form.

### Summary

Although the 2021 amendment to the Electronic Books and Documents Preservation Act (Act on Special Provisions Concerning Preservation Methods for Books and Documents Related to National Tax Prepared by Means of Computers (Act No. 25 of 1998)) relaxes the requirements for preservation of electronic books and documents, the three documentary items of the transaction date, the transaction amount, and the counterparty are still included in the preservation requirements and must be maintained by the party responsible for preservation. However, in some cases it is possible that a user of a system that manages forms such as account books may not know which items of an account book must be maintained.

Accordingly, it is an object of the present disclosure to manage account books smoothly compared to the case where documentary items are displayed without being distinguished from items other than documentary items, even for a user who does not know which items are documentary items.

According to a first aspect of the present disclosure, there is provided an information processing device including a processor configured to: acquire a read image; extract items from the acquired read image through character recognition, the items including a documentary item to be treated as a search condition according to the Electronic Books and Documents Preservation Act; and control a display of a screen indicating corresponding items for confirming the extracted items such that the documentary item is distinguishable from an other item, that is, an item other than the documentary item among the corresponding items.

According to a second aspect of the present disclosure, in the information processing device according to the first aspect, the processor is configured to control the display of the screen indicating the corresponding items to indicate whether the screen is changeable from the screen indicating the corresponding items to a next screen, depending on a state of the documentary item.

According to a third aspect of the present disclosure, in the information processing device according to the second aspect, the processor is configured to control the display to indicate that the screen is changeable to the next screen in a case where the documentary item is acquired.

According to a fourth aspect of the present disclosure, in the information processing device according to the second aspect, the processor is configured to control the display to indicate that the screen is not changeable to the next screen in a case where the documentary item is not acquired.

According to a fifth aspect of the present disclosure, in the information processing device according to the fourth aspect, the processor is configured to control the display such that in a case where the documentary item is not acquired, an indication of the unacquired documentary item is displayed.

According to a sixth aspect of the present disclosure, in the information processing device according to the first aspect, the processor is configured to control the display such that in a case where a user confirms content read in correspondence with the documentary item, the documentary item and the other item are displayed in a distinguishable way.

According to a seventh aspect of the present disclosure, in the information processing device according to the sixth aspect, in a case where the user reviews the content of the documentary item, the processor is configured to prompt the user to perform a confirmation operation on a candidate determined by a confidence level of a result of the character recognition; and in a case where the user reviews the content of the other item, the processor is configured to: allow the user to skip the confirmation operation for a candidate determined by the confidence level; and prompt the user to perform an operation in a case of revising the content.

According to an eighth aspect of the present disclosure, in the information processing device according to the sixth aspect, in a case where the user reviews the content of the documentary item, the processor is configured to notify the user about a confidence level of a result of the character recognition if the confidence level of the documentary item is lower than a predetermined value; and in a case where the user reviews the content of the other item, the processor is configured to not notify the user about a confidence level of a result of the character recognition, even if the confidence level of the other item is lower than a predetermined value.

According to a ninth aspect of the present disclosure, in the information processing device according to the first aspect, in a case where the user reviews content read in correspondence with the documentary item and revises the content, the processor is configured to display a history of revision and an element for confirming the revised content.

According to a 10th aspect of the present disclosure, in the information processing device according to the first aspect, in a case where content read in correspondence with the items is outputted, the processor is configured to disallow removal of the documentary item from the output.

According to an 11th aspect of the present disclosure, in the information processing device according to the first aspect, the processor is configured to allow the user to toggle whether the documentary item is displayed so as to be distinguishable from the other item.

According to a 12th aspect of the present disclosure, in the information processing device according to the 11th aspect, in a case where the display is toggled to the non-distinguishable state, if the user toggles the display to the distinguishable state after confirming the content of the documentary item and the other item, the processor is configured to retain information about a user operation performed on the other item, but not retain information about a user operation performed on the documentary item.

According to a 13th aspect of the present disclosure, there is provided an information processing method including: acquiring a read image; extracting items from the acquired read image through character recognition, the items including a documentary item to be treated as a search condition according to the Electronic Books and Documents Preservation Act; and controlling a display of a screen indicating corresponding items for confirming the extracted items such that the documentary item is distinguishable from an other item, that is, an item other than the documentary item among the corresponding items.

According to a 14th aspect of the present disclosure, there is provided a program causing an information processing device to execute a process including: acquiring a read image; extracting items from the acquired read image through character recognition, the items including a documentary item to be treated as a search condition according to the Electronic Books and Documents Preservation Act; and controlling a display of a screen indicating corresponding items for confirming the extracted items such that the documentary item is distinguishable from an other item, that is, an item other than the documentary item among the corresponding items.

According to the first aspect, it is possible to enable the smooth management of account books compared to the case where documentary items are displayed without being distinguished from items other than documentary items, even for a user who does not know which items are documentary items.

According to the second aspect, it is possible to reduce the user operation burden compared to the case where the display of the screen indicating the corresponding items is not controlled to indicate whether the screen is changeable from the screen indicating the corresponding items to the next screen, depending on the state of the documentary item.

According to the third aspect, it is possible to attain an improvement in ease of use compared to the case where the display is not controlled to indicate that the screen is changeable to the next screen when the documentary item is acquired.

According to the fourth aspect, it is possible to attain an improvement in ease of use compared to the case where the display is not controlled to indicate that the screen is not changeable to the next screen when the documentary item is not acquired.

According to the fifth aspect, it is possible to attain an improvement in ease of use compared to the case where the display is not controlled such that if the documentary item is not acquired, an indication of the unacquired documentary item is displayed.

According to the sixth aspect, it is possible to reduce the user operation burden compared to the case where the display is not controlled such that in a case where a user confirms content read in correspondence with the documentary item, the documentary item and the other item are displayed in a distinguishable way.

According to the seventh aspect, it is possible to reduce the user operation burden compared to the case where, when the user reviews the content of the other item, control is not performed to allow the user to skip the confirmation operation for a candidate determined by the confidence level and prompt the user to perform an operation when revising the content.

According to the eighth aspect, it is possible to reduce the user operation burden compared to the case where, when the user reviews the content of the other item, control to not notify the user about a confidence level of a result of the character recognition, even if the confidence level of the other item is lower than a predetermined value, is not adopted.

According to the ninth aspect, the work of confirming the revised content may be performed more accurately compared to the case where, when the user reviews content read in correspondence with the documentary item and revises the content, control is not performed to display a history of revision and an element for confirming the revised content.

According to the 10th aspect, it is possible to improve output-related ease of use for the user compared to the case where, when content read in correspondence with the items is outputted, removal of the documentary item from the output is allowed.

According to the 11th aspect, it is possible to attain an improvement in ease of use compared to the case where the user is not allowed to toggle whether the documentary item is displayed so as to be distinguishable from the other item.

According to the 12th aspect, it is possible to attain a reduction in the information processing burden compared to the case where, if the display is toggled to the non-distinguishable state and the user toggles the display to the distinguishable state after confirming the content of the documentary item and the other item, control to retain information about a user operation performed on the other item, but not retain information about a user operation performed on the documentary item, is not adopted.

According to the 13th and 14th aspects, it is possible to enable the smooth management of account books compared to the case where documentary items are displayed without being distinguished from items other than documentary items, even for a user who does not know which items are documentary items.

### Brief Description of the Drawings

An exemplary embodiment of the present disclosure will be described in detail based on the following figures, wherein:
Fig. 1 is a diagram illustrating a schematic configuration of a form system;
Fig. 2 is a function block diagram of an information processing device;
Fig. 3 is a flowchart illustrating a process for a setting screen according to an exemplary embodiment;
Fig. 4 is a diagram illustrating a screen displayed in the case of a setting screen;
Fig. 5 is a diagram illustrating a display example 1 displayed in the case of a setting screen;
Fig. 6 is a diagram illustrating a display example 2 displayed in the case of a setting screen;
Fig. 7 is a diagram illustrating a display example 2 displayed in the case of a setting screen;
Fig. 8 is a diagram illustrating a display example 3 displayed in the case of a setting screen;
Fig. 9 is a diagram illustrating a display example 4 displayed in the case of a setting screen;
Fig. 10 is a diagram illustrating a display example 4 displayed in the case of a setting screen;
Fig. 11 is a diagram illustrating a display example 5 displayed in the case of a setting screen;
Fig. 12 is a diagram illustrating a screen displayed according to an output format setting in the case of a setting screen;
Fig. 13 is a diagram illustrating a screen displayed according to a workflow check setting in the case of a setting screen;
Fig. 14 is a diagram illustrating a screen displayed according to a required input check in the case of a setting screen;
Fig. 15 is a diagram illustrating a screen displayed in a send-back situation in the case of a setting screen;
Fig. 16 is a screen displayed in a required confirmation situation in the case of a setting screen;
Fig. 17 is a screen displayed in a required confirmation situation in the case of a setting screen;
Fig. 18 is a screen displayed in a revision situation in the case of a setting screen;
Fig. 19 is a screen displayed in a revision history display situation in the case of a setting screen;
Fig. 20 is a diagram illustrating a notification example 1 displayed in the case of a confirmation screen;
Fig. 21 is a diagram illustrating a notification example 1 displayed in the case of a confirmation screen; and
Fig. 22 is a diagram illustrating a notification example 2 displayed in the case of a confirmation screen.

### Detailed Description

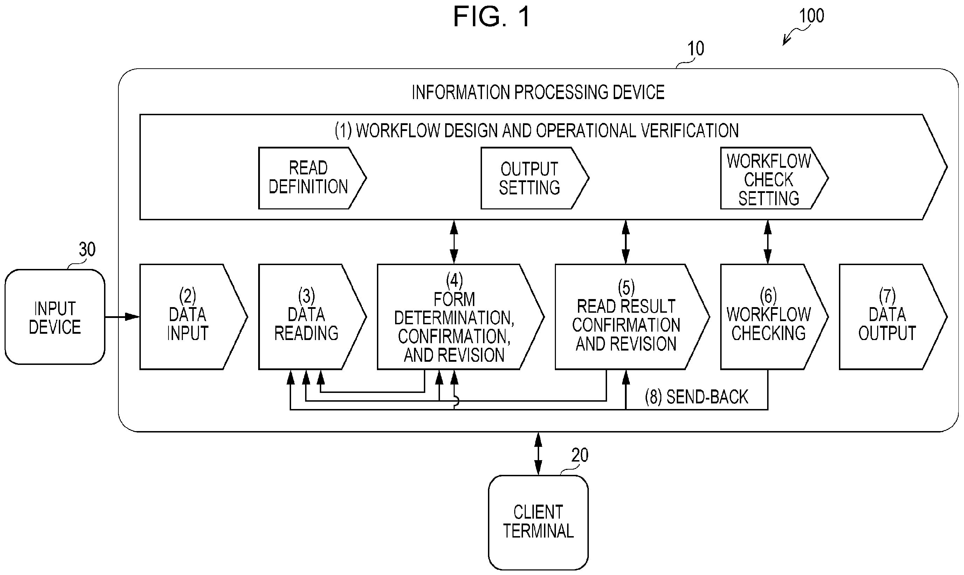

Hereinafter, an exemplary embodiment of the present disclosure will be described in detail and with reference to the attached drawings. Fig. 1 is a diagram illustrating a schematic configuration of a form system 100. The form system 100 illustrated in Fig. 1 includes an information processing device 10. The information processing device 10 is communicably connected to a client terminal 20 and an input device 30. For example, a local area network (LAN) or the Internet is used as the network connecting the information processing device 10 to the client terminal 20 and the input device 30. However, the network may also be a composite network including a LAN and the Internet.

The information processing device 10 performs an optical character recognition (OCR) process on the image data of a document including multiple pages of forms inputted through the input device 30, and manages a series of process for outputting the results of the OCR process to a predetermined destination. The specific configuration and action of the information processing device 10 will be described later.

The client terminal 20 transmits various instructions related to the OCR process to the information processing device 10. As an example, the various instructions include an instruction to start reading information in the image data, an instruction to display the results of reading information in the image data, and the like. The client terminal 20 also displays various information such as the results of the OCR process performed by the information processing device 10 according to various received instructions, notifications related to the OCR process, and the like. As an example, a general-purpose computer device such as a server device or a personal computer (PC) is applied as the client terminal 20. Although only a single client terminal 20 is illustrated in Fig. 1, the configuration is not limited thereto. Multiple client terminals 20 may be prepared, and different client terminals 20 may be used separately for different processes, for example.

The input device 30 inputs image data to be subjected to the OCR process into the information processing device 10. As an example, a general-purpose computer device such as a server device or a PC and an image forming device including functions such as a scan function, a print function, and a fax function are applied as the input device 30. Note that image data may also be inputted into the information processing device 10 from the client terminal 20 in addition to the input device 30.

Next, an overview of the form system 100 will be described. The form system 100 is a system in which the information processing device 10 performs the OCR process on image data inputted through the input device 30, and outputs the results of the OCR process to a predetermined destination.

In the OCR process, the information processing device 10 manages the various processes of (1) workflow design and operational verification, (2) data input, (3) data reading, (4) form determination, confirmation, and revision, (5) read result confirmation and revision, (6) workflow checking, (7) data output, and (8) send-back. In the present exemplary embodiment, the OCR process refers not only to a process of simply reading characters, symbols, and the like from image data, but also to post-processing such as correcting characters.

As an example of managing various processes, the processes of (1) workflow design and operational verification, (2) data input, (3) data reading, (6) workflow checking, and (7) data output are executed automatically by the information processing device 10. As another example of managing various processes, the processes of (4) form determination, confirmation, and revision and (5) read result confirmation and revision are each received according to input by a user through the client terminal 20. As another example of managing various processes, the process of (8) send-back may be executed automatically by the information processing device 10 in some cases, and received according to input by a user through the client terminal 20 in other cases.

In the process of (1) workflow design and operational verification, job rules including a read definition, an output setting, and a workflow check setting are created. In the read definition setting, for example, a reading range is set for the process of "(3) data reading", the reading range being the range from which to read information in the image data. More specifically, for example, a definition may be set such that the value is read from the area to the right of an item extracted as a key. In the output setting, for example, the file format and destination of the output data to be outputted in the process of "(7) data output" is set. In the workflow check setting, for example, required input items, a format such as the number of inputtable characters, and the like are set with respect to a form to be detected in the process of "(6) workflow check". Also, in the process of (1) workflow design and operational verification, a user interface (UI) is provided for presenting to the user an option regarding whether to preserve electronic records when defining a form, and automatically extracting frames of search items relevant to electronic record preservation to make manipulation of the form definition easier.

In the (2) data input process, the input of image data from the input device 30 is received. For example, image data is inputted by being uploaded in a browser from a local PC, linked to a cloud storage service, or accessed from hot folder in a PC. The inputted image data is registered as a job, that is, a unit of execution in the process of "(3) data reading".

In the process of (3) data reading, job rules for the job to be executed that are selected by the user from among the job rules created in the process of "(1) workflow design and operational verification" are used to read information from the image data in the job. For example, in this process, the form included in the image data in the job is determined (hereinafter referred to as "form determination") and characters and symbols in the reading range are read.

In the process of (4) form determination, confirmation, and revision, the image data in the job is classified into records indicating the forms included in the job on the basis of the result of form determination performed in the process of "(3) data reading". Thereafter, in this process, the classified records are displayed, and the form determination is confirmed or revised by the user. Such a job may be a collection of multiple form images of the same type of form, but will be explained as a collection of form images containing multiple sets of form images in application documents, an application document being a set of multiple types of forms. In other words, multiple types of form images are included in a job. A collection of multiple types of form images included in a set is referred to as a "record". Also, in the process of (4) form determination, confirmation, and revision, feedback information with respect to search items relevant to electronic record preservation is presented in a UI, and by notifying the user, efficient and accurate confirmation and revision work is achieved.

In the process of (5) read result confirmation and revision, the results of reading characters and symbols in the reading range performed in the process of "(3) data reading" is displayed, and the results are revised into a correct state or sent back. Note that a function of checking received revision results against a predetermined database and displaying conversion data on the screen to thereby save time and labor in the correction and revision process and discover errors in advance may also be provided.

In the process of (6) workflow checking, errors in each of the preceding processes are detected according to a workflow check setting included in the job rules for the job that are selected by the user from among the job rules created in the process of "(1) workflow design and operational verification". The detection results may be presented to the user. This arrangement enables the user to correct or send back the results.

In the process of (7) data output, output data is created using an output setting included in the job rules for the job that are selected by the user from among the job rules created in the process of "(1) workflow design and operational verification", and the created output data is outputted to a predetermined destination. Also, in the process of (7) data output, data containing search items relevant to electronic record preservation is outputted according to an electronic record preservation mode that preserves electronic records.

In the process of (8) send-back, data is sent back to one or multiple previous steps from a process executed in the OCR process. For example, the user issues a send-back instruction from the client terminal 20 during the execution of various processes such as "(4) form determination, confirmation, and revision" and "(5) read result confirmation and revision". As another example, a send-back instruction is issued from the client terminal 20 of an administrator depending on the result of a check performed by the administrator between the processes of "(6) workflow checking" and "(7) data output".

In the above OCR process, the process of "(1) workflow design and operational verification" is executed before the process of "(3) data reading" and subsequent processes, or in other words, before the form system 100 is put into operation. Furthermore, the process of "(1) workflow design and operational verification" may also be executed while the form system 100 is in operation and performing the process of "(3) data reading" and subsequent processes. For example, job rules created in the process of "(1) workflow design and operational verification" before the form system 100 is put into operation may be corrected according to a result from the process of "(5) read result confirmation and revision" while the form system 100 is in operation.

Here, preservation by means of electromagnetic recording in the Electronic Books and Documents Preservation Act is classified into the following three categories: preservation of an electronic book or document in which an electronically created book or document is preserved directly as data; scanner preservation in which a document received or created on paper is preserved as image data; and electronic transaction in which electronically exchanged transaction information is preserved as data. From the viewpoint of alleviating the burden of document preservation, of the three categories, scanner preservation is permitted as a way of preserving documents that must be preserved according to tax laws in the form of electronic data read by a scanner rather than as paper. Categories of documents include, for example, documents directly tied or connected to the flow of funds and goods, such as contracts, delivery statements, invoices, and receipts, and documents not directly tied or connected to the flow of funds and goods, such as estimate sheets, order forms, and inspection documents. The 2021 amendment to the law described above relaxes the conditions under which preservation in electronic data format is permitted (Electronic Books and Documents Preservation Act, article 4, section 3), and the following requirements are now sufficient for a search function to ensure visibility, for example. Namely, the transaction date or other date, the transaction amount, and the counterparty (documentary items) may be set as search conditions; for documentary items pertaining to date or amount, a condition may be set by specifying a range of dates or amounts; and a condition may be set by combining any two or more documentary items (Enforcement Regulations of the Electronic Books and Documents Preservation Act, article 2, section 6, items 6(a) to 6(c)). In this way, among the various items included in a document, the documentary items or statutory items for the search requirement are limited to the transaction date, the transaction amount, and the counterparty.

However, attaining efficiency improvements is difficult due to the labor and time involved for workers to grasp the items pertaining to the search requirement from data that the user him- or herself has extracted from hundreds or thousands of forms, and furthermore to ensure the accuracy of the extracted data, which imposes a burden on the user. The burden is even heavier on users who do not know which items are required for search. Accordingly, the present exemplary embodiment provides a configuration that lowers the cost of extracting item information and efficiently ensures the accuracy of extracted results, thereby enabling smooth management of account books even in the case of electronically preserving a large number of forms, or even for a user who does not know which items are required for search. Hereinafter, the present exemplary embodiment will be described specifically.

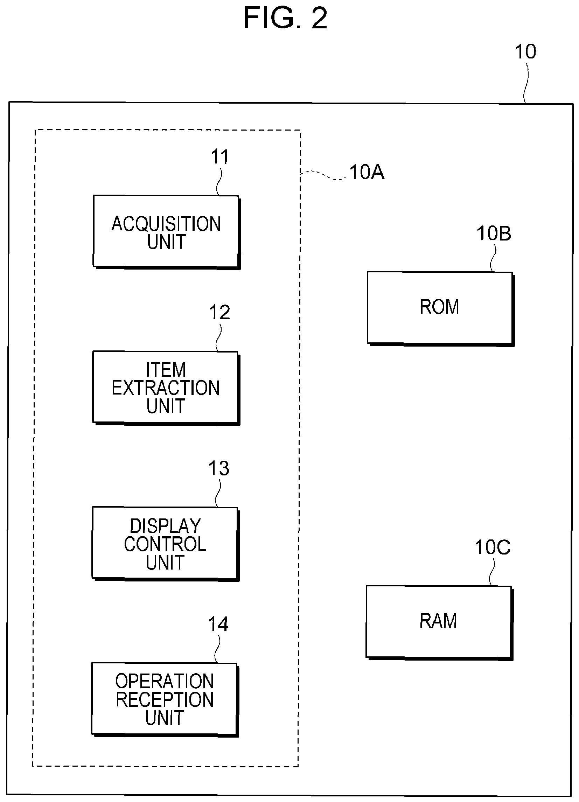

Fig. 2 is a function block diagram of the information processing device 10. As illustrated in Fig. 2, the information processing device 10 includes an acquisition unit 11, an item extraction unit 12, a display control unit 13, and an operation reception unit 14.

The acquisition unit 11 acquires image data received in "(2) data input" described above. In other words, the acquisition unit 11 acquires image data as form images from the input device 30. Note that image data acquired by the acquisition unit 11 is stored in a storage unit such as a hard disk drive (HDD) not illustrated. Additionally, operation information, that is, input information according to user operations, is stored in the HDD not illustrated.

The item extraction unit 12 performs a form determination process in units of records in "(3) data reading" described above. In other words, a process of using character recognition to extract items included in the image data is performed. Such items include documentary items to be treated as a search condition according to the Electronic Books and Documents Preservation Act, and may include other items.

The display control unit 13 controls the display of screens when displaying the results of the item extraction process in "(4) form determination, confirmation, and revision" described above. In other words, the display control unit 13 causes screens indicating items for confirming the extracted items to be displayed. Details will be described later.

The operation reception unit 14 receives a confirmation or revision to the results of the item extraction process in "(4) form determination, confirmation, and revision" described above. The received confirmation or revision is reflected on the screen by the display control unit 13. Details will be described later.

The functions of the information processing device 10 are achieved by a CPU 10A as one example of a processor. The CPU 10A reads out a program stored in read-only memory (ROM) 10B and executes the program by using random access memory (RAM) 10C as a work area. The program executed by the CPU 10A may be provided to the information processing device 10 in a recorded state on a computer-readable recording medium, such as a magnetic recording medium (such as magnetic tape or a magnetic disk), an optical recording medium (such as an optical disc), a magneto-optical recording medium, or semiconductor memory. The program executed by the CPU 10A may also be downloaded to the information processing device 10 by using a means of communication such as the Internet.

Also, the functions of the information processing device 10 are achieved by software in the present exemplary embodiment, but are not limited thereto and may also be achieved by an application-specific integrated circuit (ASIC), for example.

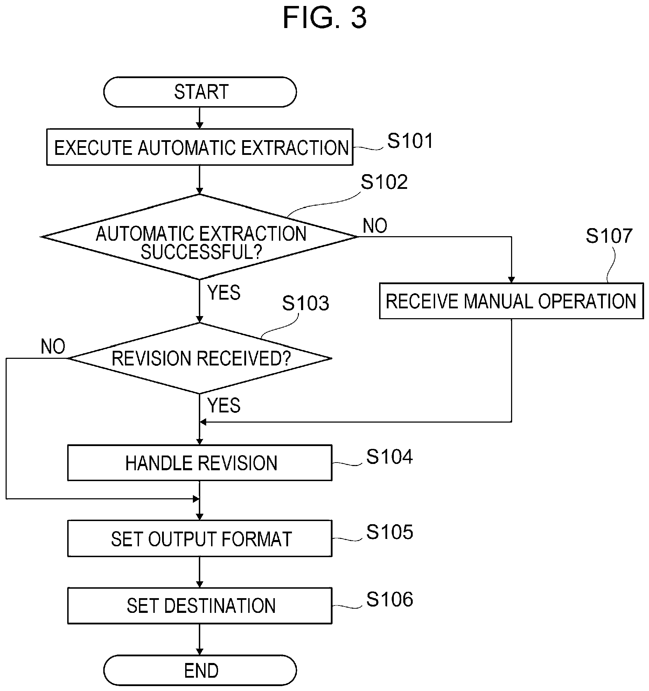

Fig. 3 is a flowchart illustrating a process for a setting screen according to the present exemplary embodiment. Fig. 3 illustrates an example of the process in "(1) workflow design and operational verification" described above (see Fig. 1), in which a screen is displayed by the display control unit 13 (see Fig. 2) when creating job rules for a form setting with respect to image data acquired by the acquisition unit 11 (see Fig. 2). The process illustrated in Fig. 3 is an example of a process executed in response to a user instruction to use a check for search items relevant to electronic record preservation. If such a user instruction is given, automatic extraction is executed (step 101). In other words, automatic extraction of search items from defined locations in the image data is performed by the item extraction unit 12 (see Fig. 2), and after the automatic extraction is executed, it is determined whether the automatic extraction was successful (step 102). Note that the items subjected to automatic extraction are the documentary items of the transaction date, the transaction amount, and the counterparty stipulated by the Electronic Books and Documents Preservation Act, but other items besides the above documentary items may also be subjected to automatic extraction.

If the automatic extraction was successful (step S102, Yes), it is next determined whether a revision is received (step 103). The determination of whether a revision is received is for determining whether the user has performed an operation for revising the results of the successful automatic extraction, and is performed by the operation reception unit 14 (see Fig. 2).

If a revision is received (step 103, Yes), the display control unit 13 (see Fig. 2) handles the revision on the display screen (step 104). Thereafter, the output format (step 105) and the destination (step 106) are set in order, and the process ends. On the other hand, if a revision is not received (step 103, No), the flow proceeds to step 105 above.

If automatic extraction was unsuccessful (step S102, No), a manual operation by the user is received (step 107), and the flow proceeds to step 104 described above to cause the received manual operation to be reflected on the display screen. In this way, if automatic extractions fails (step s102, No), or if automatic extraction is successful but demands revision by the user (step 103, Yes), a user operation is received by the operation reception unit 14 (see Fig. 2).

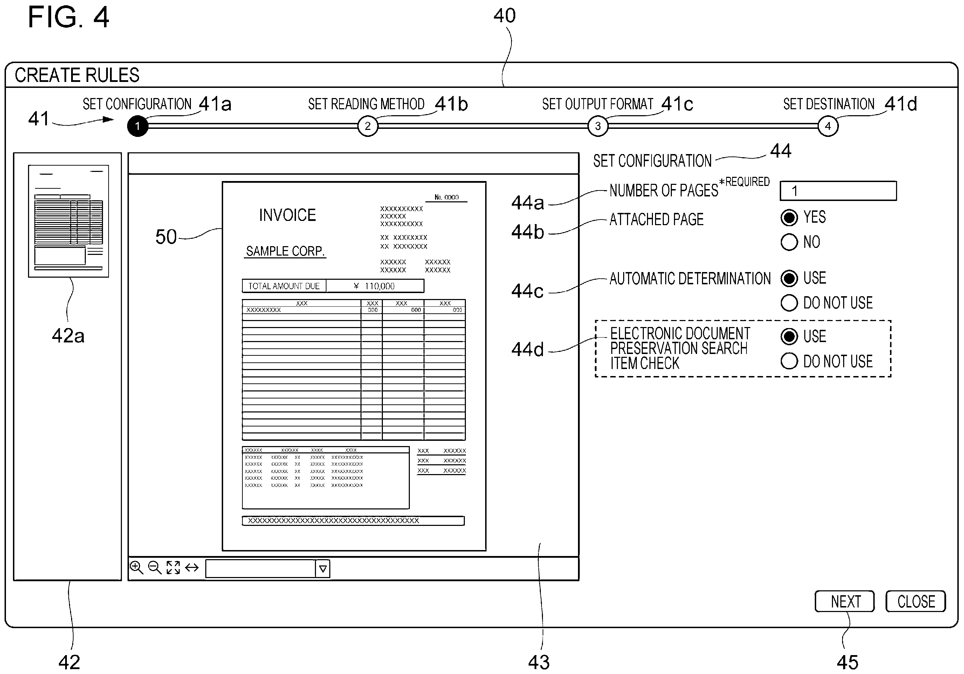

Next, a screen 40 displayed by a display unit (not illustrated) provided in the information processing device 10 will be described. Fig. 4 is a diagram illustrating the screen 40 displayed in the case of a setting screen, and is an example of a screen before automatic extraction is executed (see step 101 in Fig. 3). The screen 40 illustrated in Fig. 4 includes a progress display area 41 for displaying progress, a reduced display area 42 in which a reduced view of the image data is displayed, an enlarged display area 43 in which an enlarged view of the image data in the reduced display area 42 is displayed, a configuration settings display area 44 in which configuration settings are displayed, and an instruction area 45 where an instruction for advancing to the next screen is given.

The progress display area 41 is an area indicating information about progress through the setting screens advancing in one direction, such as from left to right, for example. In the present exemplary embodiment, the progress is indicated to the user in four stages. Specifically, the progress display area 41 is provided with a configuration setting item 41a in a first stage, a reading method setting item 41b in a second stage, an output format setting item 41c in a third stage, and a destination setting item 41d in a fourth stage. More specifically, "Set Configuration" is displayed in the setting item 41a, "Set Reading Method" is displayed in the setting item 41b, "Set Output Format" is displayed in the setting items 41c, and "Set Destination" is displayed in the setting item 41d.

Described in further detail, in the progress display area 41, the current stage among the four stages is indicated according to the transparency level and color. For example, in Fig. 4, for the setting item 41a, the font is indicated clearly with a low transparency level and the display of a numeral 1 is emphasized. On the other hand, for the other setting items 41b to 41d, the front is not indicated clearly and with a higher transparency level, such as translucent, for example, compared to the setting item 41a, and the display of numerals 2 to 4 is not emphasized. With this arrangement, a user looking at the screen 40 illustrated in Fig. 4 is able to grasp that there are four stages and the current progress is at the first stage.

The reduced display area 42 is an area running vertically along the left side of the screen that indicates the image data for which job rules are to be defined. If multiple pieces of image data exist, the image data is arranged from top to bottom. Note that in Fig. 4, image data 42a obtained by reducing a form image is illustrated, but the content of the form is omitted from illustration.

The enlarged display area 43 is an area in the approximate center of the screen, in which the image data 42a in the reduced display area 42 is enlarged enough for the user to be able to confirm the content. Note that, as illustrated in Fig. 4, the user is able to confirm that the enlarged image data 50 is an invoice and is also able to confirm the name and content of each item in the image data 50.

The configuration settings display area 44 is an area on the right side of the screen for setting the configuration of the image data 50. More specifically, a number of pages 44a, an indication of whether an attached page 44b exists, an indication of whether or not to use automatic determination 44c, and an indication of whether or not to use an electronic document preservation search item check 44d are included as the configuration of the image data 50. The number of pages 44a is an item with a numerical input field, while the three remaining items 44b to 44d are selected by radio buttons.

If the "Use" radio button for the "Electronic Document Preservation Search Item Check" 44d enclosed in the dashed-line frame in Fig. 4 is selected, the information processing device 10 determines that there a user instruction to use a check for search items in accordance with electronic document preservation, and the process example illustrated in Fig. 3 described above is performed. Note that although the item is labeled "Electronic Document Preservation Search Item Check" in the present exemplary embodiment, the item may also be labeled "Electronic Document Preservation Check" or "Electronic Document Preservation".

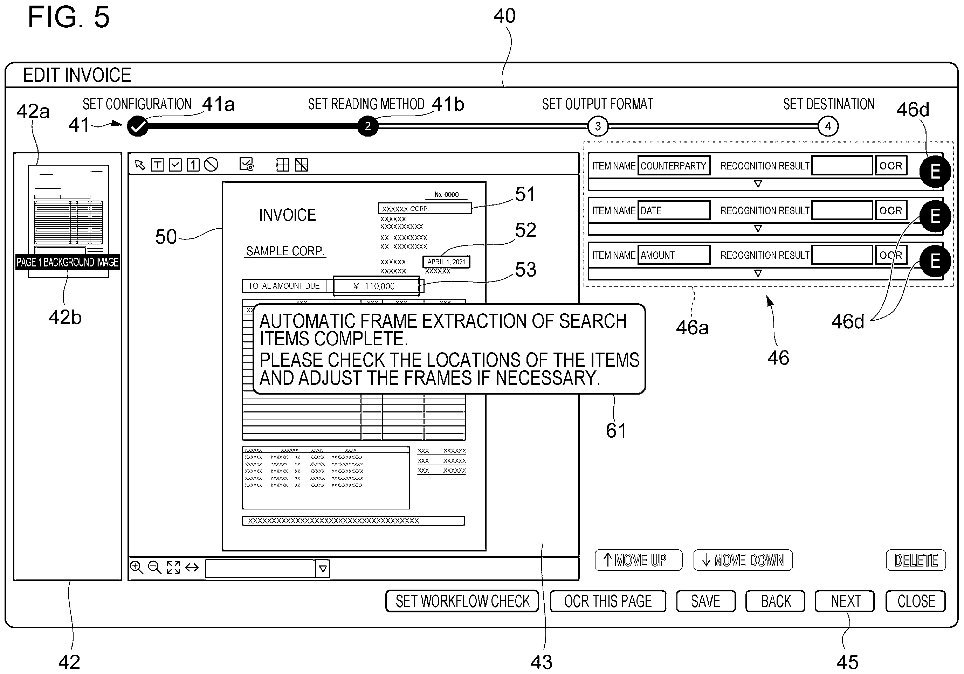

If the function of the electronic document preservation search item check 44d is enabled by the radio button, processes such as the automatic extraction of search items from defined locations in the image data 50 (step 101, see Fig. 3) are performed. Also, if the function of the search item check 44d is enabled, the documentary items complying with the Electronic Books and Documents Preservation Act are displayed so as to be distinguishable from other items, as illustrated on the screens 40 and 140 in Fig. 5 and subsequent drawings described later. On the other hand, if the function of the search item check 44d is not enabled, the automatic extraction process described above is not performed, and the documentary items are not displayed so as to be distinguishable from other items. In this way, in the present exemplary embodiment, it is possible to use the radio buttons of the search item check 44d to toggle whether the documentary items are displayed so as to be distinguishable from other items.

In the example illustrated on the screen 40, the word "Next" is displayed in the instruction area 45. Described in further detail, like the case of the progress display area 41, the user is notified by changing whether the instruction area 45 is displayed clearly according to the transparency level and the like. When the instruction area 45 is displayed clearly, the user is notified that the instruction area 45 is ready to receive a user instruction (active), whereas when the instruction area 45 is not displayed clearly, the user is notified that the instruction area 45 is not ready to receive a user instruction (inactive).

If the user presses the instruction area 45 and gives an instruction to advance to the next screen after finishing performing input operations in the configuration settings display area 44, the progress advances from the stage of the setting item 41a to the stage of the reading method setting item 41b in the progress display area 41, and automatic extraction is executed (see step 101 in Fig. 3).

Next, display examples 1 to 5 displayed on the screen 40 in the "Set Reading Method" situation (see sign 41b in Fig. 4) described above on the setting screen will be described using Figs. 5 to 11. Note that in Figs. 5 to 11, "Edit Invoice" is displayed in the upper-left corner of the screen 40, indicating to the user that an invoice is being edited. Moreover, the image data 50 being an "invoice" is determined according to form determination through OCR recognition, and does not require an input operation by the user.

Fig. 5 is a diagram illustrating the screen 40 displayed in the case of a setting screen, and is a display example 1 displayed when automatic extraction was successful (see Fig. 3, step 102, Yes). As the display of the progress display area 41 makes clear, the screen 40 of the display example 1 illustrated in Fig. 5 is a situation in which the setting item 41a has been completed and the progress has proceeded to the next reading method setting item 41b. Note that in Fig. 5, an image 42b indicating "Page 1 Background Image" is added to the image data 42a in the reduced display area 42.

Described in further detail, a setting content display area 46 indicating the content of the reading method setting is displayed at the position of the configuration settings display area 44 (see Fig. 4) on the screen 40. The setting content display area 46 is provided with a documentary item area 46a corresponding to the documentary items according to the Electronic Books and Documents Preservation Act.

The documentary item area 46a is an area with three rows for displaying the documentary items stipulated by the Electronic Books and Documents Preservation Act, namely items corresponding to the transaction date or other date, the transaction amount, and the counterparty. More specifically, in the top row, "Counterparty" as the item name, a field indicating the recognition result, an OCR display, and a documentary item icon image 46d indicating that the item is a documentary item are arranged in the above order in a row from left to right. The documentary item icon image 46d is an image of the letter "E" enclosed in a circle, and may be displayed such that a color is applied to the circle while leaving the letter "E" white, for example. Also, the item name is "Date" in the middle row and "Amount" in the bottom row, and the other portions of the middle and bottom rows are the same as the top row.

The documentary item area 46a is displayed in the case where the "Use" radio button for "Electronic Document Preservation Search Item Check" 44d is selected, and removal by the user is not permitted.

Also, on the screen 40 in Fig. 5, a display corresponding to the execution of automatic extraction (see step 101 in Fig. 3) exists. Namely, a notification frame 61 for notifying the user that automatic extraction was successful is displayed straddling the enlarged display area 43 and the setting content display area 46 on the screen 40. The notification frame 61 contains the following message: "Automatic frame extraction of search items complete. Please check the locations of the items and adjust the frames if necessary." In correspondence with the execution of automatic extraction, automatic frame images 51, 52, and 53 are indicated on the image data 50 in the enlarged display area 43. The automatic frame image 51 corresponds to "Counterparty" in the top row of the documentary item area 46a, the automatic frame image 52 corresponds to "Date" in the middle row, and the automatic frame image 53 corresponds to "Amount" in the bottom row.

If the frames of the search items were all extracted and automatic extraction was successful (see Fig. 3, step 102, Yes), the instruction area 45 is activated and becomes operable by the user. In the case of Fig. 5, automatic extraction was successful, and therefore the instruction area 45 is displayed clearly so as to be easily recognized by the user and is in the active state. Note that in the case where not all frames of the search items were extracted (Fig. 3, step 102, No), the instruction area 45 is not activated and the user is unable to perform an operation on the instruction area 45.

In this way, on the screen 40 in Fig. 5, an indication of whether it is possible to proceed to the next screen is displayed according to the state of the three items in the documentary item area 46a. Namely, by activating the instruction area 45 when all three items are acquired, an indication that it is possible to proceed to the next screen is displayed, and by deactivating the instruction area 45 when not all three items are acquired, an indication that it is not possible to proceed to the next screen is displayed. Note that "all three items are acquired" herein refers to the state in which input is complete for all of the documentary items, and "not all three items are acquired" refers to the state in which input is incomplete for at least one of the documentary items. "Input" includes the case where a character recognition results obtained by automatic extraction is inputted as well as the case where a character recognition result is inputted into a frame set manually by the user. Note that the notification frame 61 in Fig. 5 indicates that automatic frame extraction of the search items is complete, and such a display also enables the user to grasp that it is possible to proceed to the next screen. Also, although omitted from illustration, a message indicating that it is possible to proceed to the next screen may also be displayed on the screen 40.

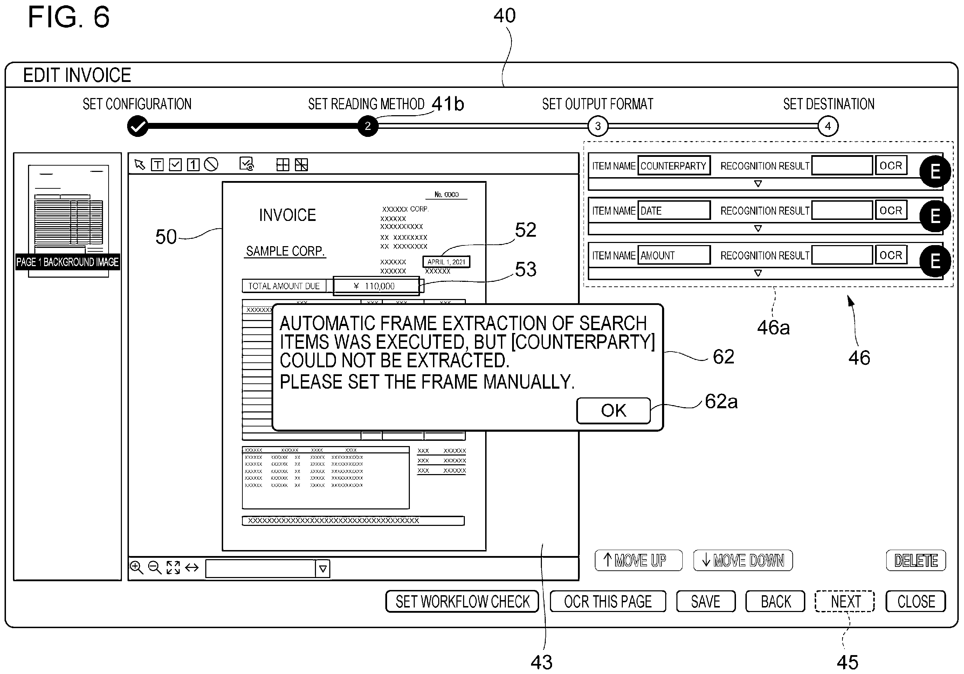

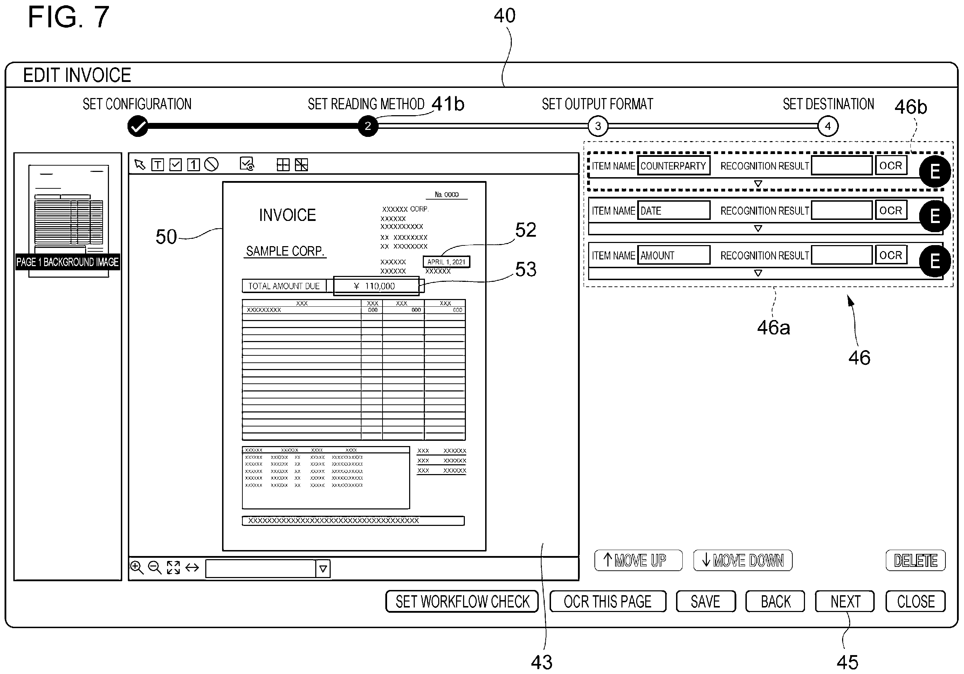

Figs. 6 and 7 are diagrams illustrating the screen 40 displayed in the case of a setting screen, and illustrate a display example 2 displayed when automatic extraction was unsuccessful (see Fig. 3, step 102, No). Figs. 6 and 7 are illustrated sequentially, and in the display example 2, Fig. 7 is displayed after Fig. 6. As illustrated in Fig. 6, a notification frame 62 is displayed on the screen 40 in the display example 2. The notification frame 62 contains the following error message: "Automatic frame extraction of search items was executed, but [Counterparty] could not be extracted. Please set the frame manually." In other words, the notification frame 62 indicates that from among "Counterparty", "Date" and "Amount" in the documentary item area 46a, automatic extraction of "Counterparty" was unsuccessful, and instructs the user to set the frame manually. Referring to Fig. 6, the automatic frame image 51 (see Fig. 5) corresponding to "Counterparty" is not illustrated in the image data 50.

In the situation illustrated in Fig. 6, not all frames of the search items have been extracted, and therefore the instruction area 45 is deactivated and in an inactive state. In other words, the instruction area 45 is displayed in a hard-to-see state, and the information processing device 10 does not respond even if the user performs an operation at the position of the instruction area 45. Accordingly, the user may operate an OK button 62a in the notification frame 62 instead of operating the instruction area 45, and thereby switch to a screen on which manual operations are available.

If the user operates the OK button 62a in the notification frame 62, the screen display changes to the screen 40 illustrated in Fig. 7. In other words, as illustrated in Fig. 7, the frame setting for the item name "Counterparty" in the top row of the documentary item area 46a in the setting content display area 46 changes to an active state 46b. The user manually specifies the area corresponding to "Counterparty" in the image data 50 in the enlarged display area 43. If the user specifies an area, the instruction area 45 that had been inactive is activated.

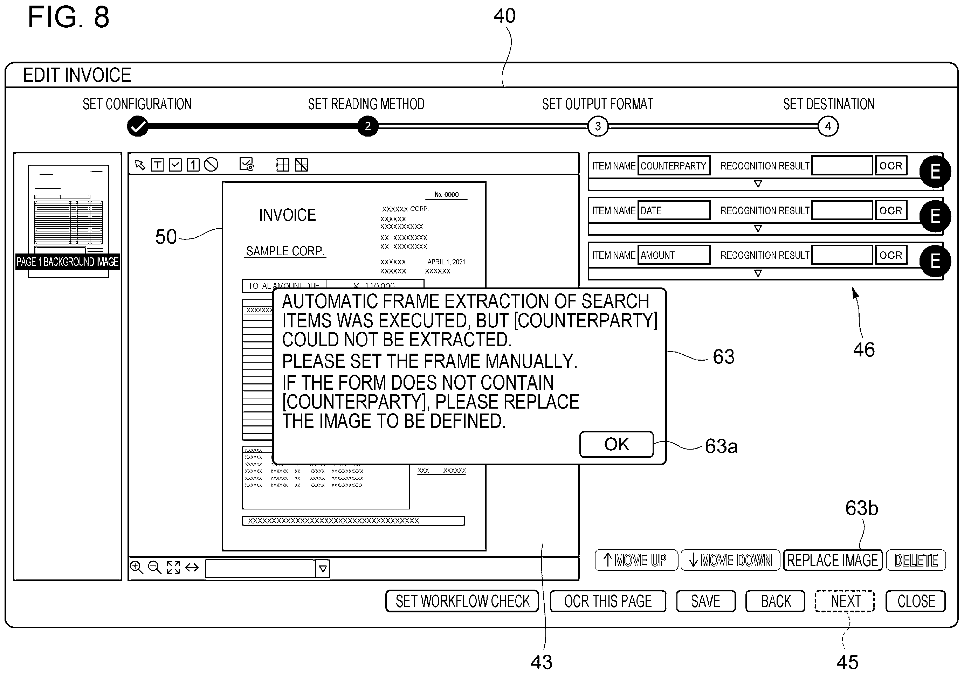

Fig. 8 is a diagram illustrating the screen 40 displayed in the case of a setting screen, and is a display example 3 displayed when automatic extraction was unsuccessful (see Fig. 3, step 102, No). A notification frame 63 is displayed on the screen 40 in the display example 3 illustrated in Fig. 8. The notification frame 63 contains the error message "Automatic frame extraction of search items was executed, but [Counterparty] could not be extracted. Please set the frame manually." followed by the message "If the form does not contain [Counterparty], please replace the image to be defined." In other words, the notification frame 63 in the display example 3 is displayed in the case where information corresponding to the search item "Counterparty" is not found in the form image, that is, the image data 50. An OK button 63a is also displayed in the notification frame 63.

Described in further detail, as illustrated in Fig. 8, a button 63b for executing image replacement is displayed in the display example 3. The button 63b may be displayed in association with the pressing of the OK button 63a in the notification frame 63. Note that in the display example 3, like display example 2, the instruction area 45 is inactive.

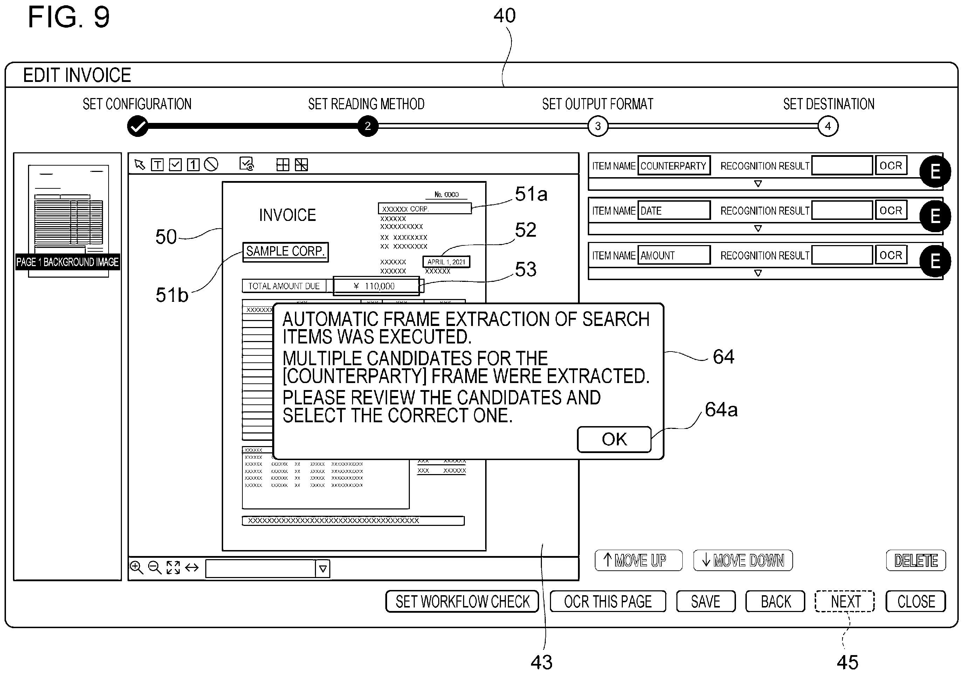

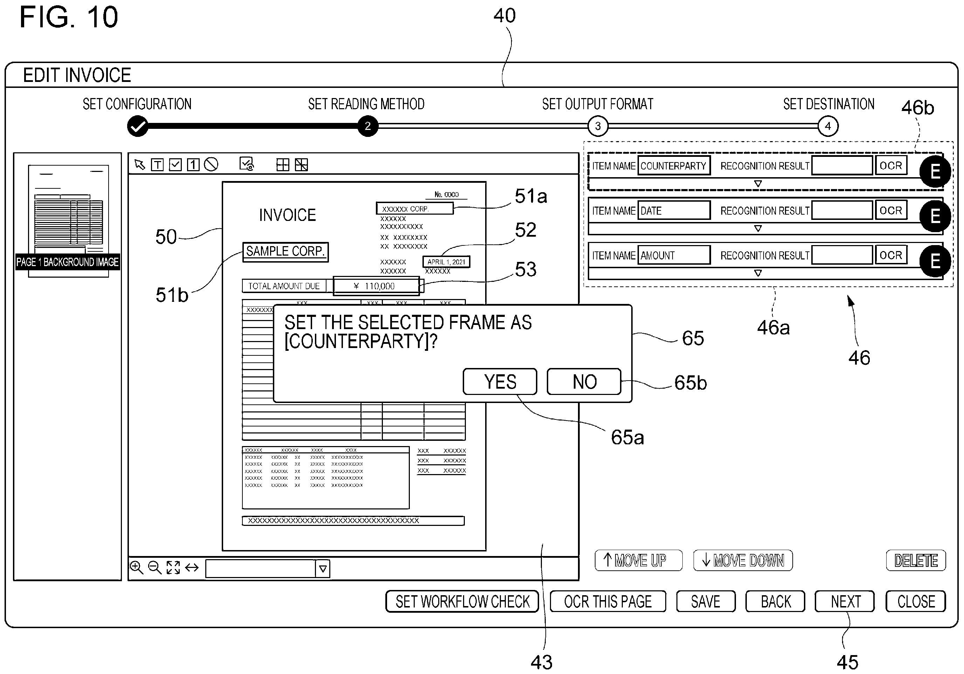

Figs. 9 and 10 are diagrams illustrating the screen 40 displayed in the case of a setting screen, and is a display example 4 displayed when automatic extraction was successful (see Fig. 3, step 102, Yes) and revision handling (see Fig. 3, step 104) is performed. Figs. 9 and 10 are illustrated sequentially, and in the display example 4, Fig. 10 is displayed after Fig. 9. The notification frame 64 illustrated in Fig. 9 is displayed on the screen 40 in the display example 4. The notification frame 64 contains the following error message: "Automatic frame extraction of search items was executed. Multiple candidates for the [Counterparty] frame were extracted. Please review the candidates and select the correct one." In other words, in this case, automatic extraction was successful, but there are multiple candidates, and the user is instructed to confirm which of the multiple candidates is the correct one. Note that the instruction area 45 is inactive, and the user may operate an OK button 64a in the notification frame 64 to switch to a screen on which manual operations are available.

If the user operates the OK button 64a in the notification frame 64, the screen display changes to the screen 40 illustrated in Fig. 10. In other words, like the case of the display example 2 illustrated in Fig. 7, the frame setting for the item name "Counterparty" in the top row of the documentary item area 46a in the setting content display area 46 changes to an active state 46b. The user manually specifies one of the multiple areas 51a and 51b which may correspond to "Counterparty" in the image data 50 in the enlarged display area 43. In other words, the areas 51a and 51b which are candidates for "Counterparty" are activated by an emphasized display, for example.

If the user specifies the area 51a, for example, as illustrated in Fig. 10, a notification frame 65 containing the message "Set the selected frame as [Counterparty]?" is displayed. A "Yes" button 65a and a "No" button 65b are displayed in the notification frame 65. If the user presses the "Yes" button 65a, the instruction area 45 is activated and made operable.

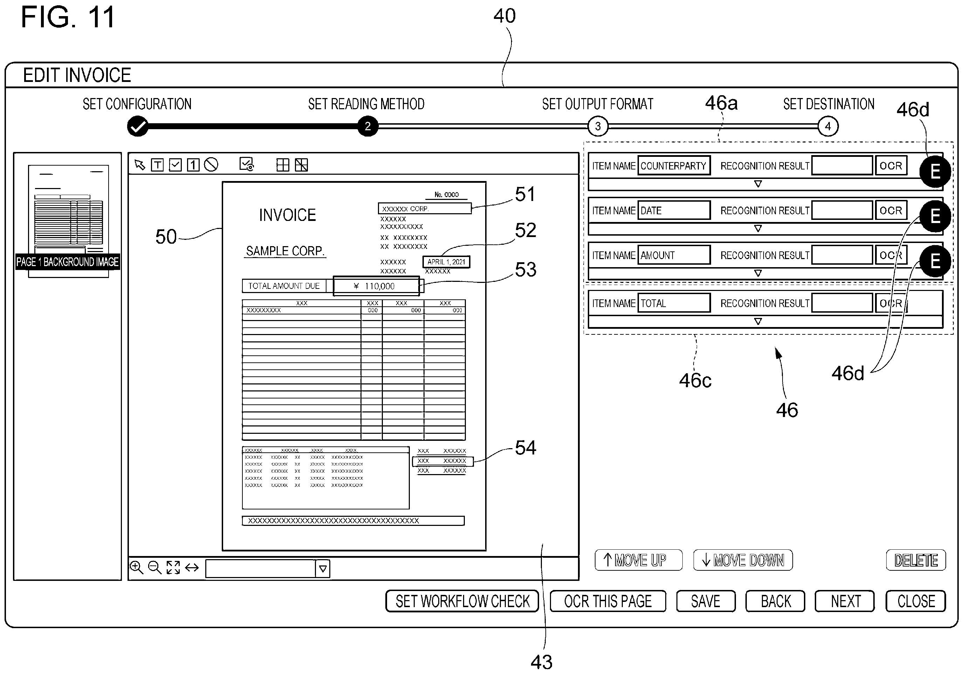

Fig. 11 is a diagram illustrating the screen 40 displayed in the case of a setting screen, and is a display example 5 displayed when automatic extraction was successful (see Fig. 3, step 102, Yes) and revision handling (see Fig. 3, step 104) is performed. The display example 5 in Fig. 11 is displayed in the case where the user adjusts the frame in the display example 1 in Fig. 5. In the image data 50 in the enlarged display area 43 illustrated in Fig. 11, a manual frame image 54 is indicated in addition to the automatic frame images 51 to 53 (see also Fig. 5). Whereas the automatic frame images 51 to 53 are extracted automatically, the manual frame image 54 is added manually by the user.

In addition, the setting content display area 46 is provided with an other item area 46c in which an other item, that is, an item other than the documentary items, is displayed. The other item area 46c corresponds to the manual frame image 54, and in the other item area 46c, "Total" as the item name, a field indicating the recognition result, and an OCR display are arranged in a row.

Like the documentary item area 46a, the other item area 46c includes an item name, a field indicating the recognition result, and an OCR display. On the other hand, the other item area 46c differs from the documentary item area 46a by not including the documentary item icon image 46d indicating that the item is a documentary item. In other words, the user recognizes whether an item is a documentary item according to whether the documentary item icon image 46d is present or absent. In this way, on the screen 40 in Fig. 11, the three items in the documentary item area 46a and the item in the other item area 46c are displayed in a distinguishable state.

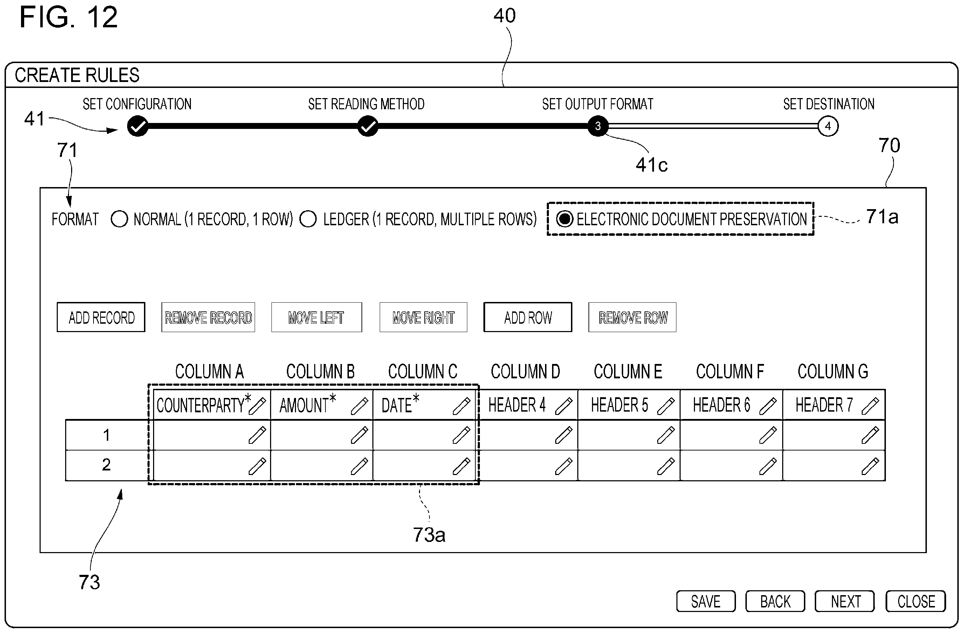

Next, a display example displayed on the screen 40 in the "Set Output Format" situation (see sign 41c in Fig. 4) on the setting screen will be described. Fig. 12 is a diagram illustrating the screen 40 displayed in the case of a setting screen, and is displayed when setting the output format (see Fig. 3, step 105). The screen 40 illustrated in Fig. 12 indicates that the progress has advanced to the setting item 41c in the third stage, as indicated in the progress display area 41.

Additionally, the screen 40 is provided with an output format display area 70 in which detailed output format settings are displayed. The output format display area 70 is provided with an area 71 indicating the output format and an area 73 indicating the content of records. In this case, when read content is outputted, the three items "Counterparty", "Amount", and "Date" in the documentary item area 46a are included in the output.

A radio button for electronic document preservation 71a in the area 71 indicating the output format is selectable in the case where the "Use" radio button in the "Electronic Document Preservation Search Item Check" 44d (see Fig. 4) is selected. Note that by selecting ledger "one record, multiple rows" as the output format, data may be outputted in CSV format and may also be saved as a file.

A documentary item display portion 73a in the area 73 includes the documentary items "Counterparty", "Amount", and "Date" in columns A, B, and C, respectively. The columns are non-removable but may be rearranged. In other words, the documentary items are not allowed to be removed from the items to be outputted, and are included in the output.

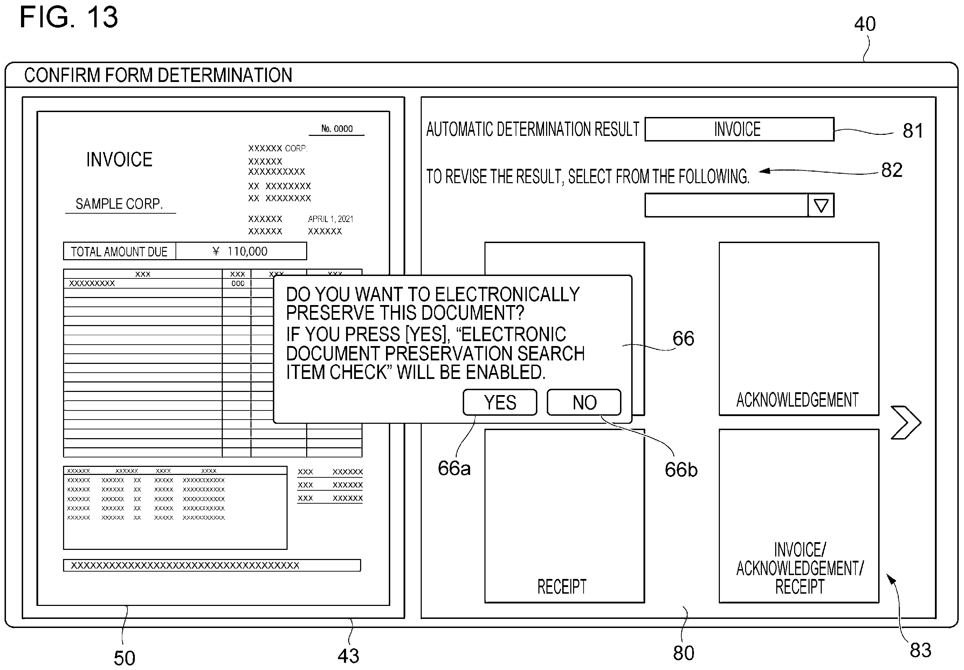

Fig. 13 is a diagram illustrating the screen 40 displayed in the case of a setting screen, and is displayed when setting the workflow check (see Fig. 1). In other words, Fig. 13 illustrates the case of verifying the job rules without enabling the function of "Electronic Document Preservation Search Item Check" 44d (see Fig. 4). The screen 40 illustrated in Fig. 13 illustrates an example of form determination result confirmation and revision when verifying the job rules, and is provided with the enlarged display area 43 illustrating the image data 50 and a document name display area 80 indicating an automatic determination result for the document name. The document name display area 80 is provided with an area 81 indicating the automatic determination result, an area 82 for accepting input when a revision is made, and an area 83 illustrating reference images of document names. In addition, a notification frame 66 is displayed on the screen 40. The notification frame 66 contains the following message: "Do you want to electronically preserve this document? If you press [Yes], "Electronic Document Preservation Search Item Check" will be enabled." A "Yes" button 66a and a "No" button 66b are displayed in the notification frame 66.

In the example in Fig. 13, an automatic determination result that has set "Invoice" in the area 81 is illustrated. If the image data 50 is an invoice, the user presses the "Yes" button 66a in the notification frame 66 to electronically preserve the document. On the other hand, if the image data 50 is not an invoice, the user inputs a document name other than invoice in the area 82 while referring to the area 83, and then presses the "Yes" button 66a.

If the "Yes" button 66a is pressed, the screen display changes to the screen 40 illustrated in Fig. 4 described above, and job rules are defined. At this time, it is conceivable that the function of "Electronic Document Preservation Search Item Check" 44d (see Fig. 4) may be enabled. In the case where the function of "Electronic Document Preservation Search Item Check" 44d (see Fig. 4) is not enabled and therefore the documentary items in the documentary item area 46a are not displayed in a way that is distinguishable from the other item in the other item area 46c, when switching to a display that makes the items distinguishable, operation information about operations by the user so far may be handled differently between operations performed on the documentary items and operations performed on the other item. For example, in one possible mode of control, operation information about user operations performed on documentary items is not stored in the HDD not illustrated, whereas operation information about user operations performed on other items is stored in the HDD not illustrated. In principle, every operation performed on the documentary items stipulated by the Electronic Books and Documents Preservation Act is to be performed by the user. Consequently, the documentary items stipulated by the Electronic Books and Documents Preservation Act are confirmed by the user every time.

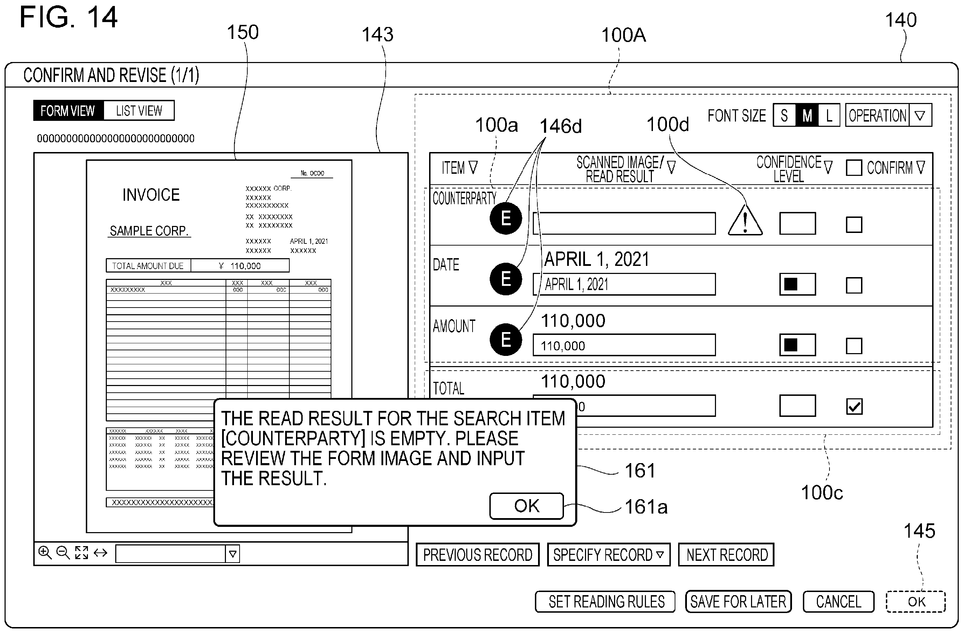

Next, a confirmation screen will be described. The confirmation screen represents situations in which processes are executed on the basis of settings set on the setting screen, and is a display example illustrating the processes of "(4) form determination, confirmation, and revision" and "(5) read result confirmation and revision" described above (see Fig. 1). Such a display example will be described using Figs. 14 to 19.

Fig. 14 is a diagram illustrating a screen 140 displayed in the case of a confirmation screen, and represents an example of a correctable situation in which a required input check is performed during OCR confirmation and revision according to the settings on the screen 40 illustrated in Fig. 11. As illustrated in Fig. 14, the screen 140 is provided with an enlarged display area 143 on the left side of the screen in which an enlarged view of image data 150 is displayed, and a result display area 100A on the right side of the screen in which read results are illustrated. The enlarged display area 143 corresponds to the enlarged display area 43 in Fig. 4, for example.

The result display area 100A is provided with a documentary item area 100a corresponding to documentary items in the Electronic Books and Documents Preservation Act and an other item area 100c which is positioned below the documentary item area 100a and in which other items, that is, items other than the documentary items, are displayed.

The documentary item area 100a corresponds to the documentary item area 46a on the setting screen (see Fig. 11, for example), and is an area with three rows in which "Counterparty", "Date", and "Amount" are arranged from top to bottom. More specifically, in each of the three rows, the item name, a documentary item icon image 146d indicating that the item is a documentary item, a field indicating the recognition result, a confidence level, and a confirmation check box are arranged in the above order from left to right. Although the arrangement in the documentary item area 100a differs from the documentary item area 46a on the setting screen (see Fig. 11, for example), the item name and the documentary item icon image 146d (which corresponds to the documentary item icon image 46d in the documentary item area 46a) are shared in common with the documentary item area 46a, whereas the field indicating a recognition result or the like (the field titled "Scanned Image/Read Result"), the confidence level, and the confirmation check box provided in the documentary item area 100a are different from the documentary item area 46a.

The confidence level herein is the confidence level of the result of character recognition, and refers to the degree to which the image data 150 and the OCR recognition result match. The confidence level may be displayed such that it is possible to distinguish whether the confidence level is higher or lower than a predetermined threshold value, and moreover, the magnitude of the confidence level may be categorized into three stages and displayed as an image. For example, in the case where the magnitude of the confidence level is displayed as the length of a bar extending from left to right, the color of the bar when the confidence level is low may be different from the color of the bar otherwise. The confidence level may be calculated by applying a known algorithm, such as pattern matching using feature vectors and templates or a method of using a neural network obtained by machine learning that accepts images to be compared as input and outputs the confidence level of the comparison, for example.

In addition, an alert icon image 100d displayed to alert the user depending on the confidence level may be displayed in the documentary item area 100a. In the case illustrated in Fig. 14, the confidence level of "Counterparty" in the top row is lower than a predetermined threshold value, and thus the field indicating the recognition result is empty. To information the user of such a situation, the alert icon image 100d is displayed near the confidence level in the top row.

After the user inputs a confirmation result, the system executes an "automatic check of revision result" process, and if the check passes, the alert icon image 100d is no longer displayed. Here, the "automatic check of revision result" process is executed as part of the process of "(5) read result confirmation and revision" described above (see Fig. 1). Note that, as illustrated in Fig. 14, the alert icon image 100d is an image of an exclamation point inside an equilateral triangle, and to increase visibility further, the equilateral triangle may be colored red while leaving the exclamation point white, for example. In this way, on the screen 140 in Fig. 14, the three items in the documentary item area 100a and the item in the other item area 100c are displayed in a distinguishable state.

To describe the alert icon image 100d further, the alert icon image 100d is displayed in the documentary item area 100a as described above to notify the user when the confidence level is lower than a predetermined value. However, with respect to the other item area 100c, the alert icon image 100d is not displayed and the user is not notified even though the confidence level is lower than the predetermined value, as illustrated in Fig. 14. In this way, the display of the alert icon image 100d is controlled differently between the documentary item area 100a and the other item area 100c. This is because documentary items demand more accurate input than other items. Note that the display of the alert icon image 100d in the other item area 100c may also be controlled in the same way as for the documentary item area 100a.

In the result display area 100A, the field indicating a recognition result or the like titled "Scanned Image/Read Result" is divided into upper and lower portions. The upper portion is an area indicating a scanned image. The lower portion indicates the read result, and accepts input if the user decides to revise read result. The user is able to confirm the scanned image from the upper portion, confirm the read result from the lower portion, and revise the content in the lower portion.

In the result display area 100A, the documentary item icon image 146d is displayed in the documentary item area 100a but is not displayed in the other item area 100c. Accordingly, when the user confirms the read content from the field indicating the recognition result or the like, the three items in the documentary item area 100a and the item in the other item area 100c are displayed in a distinguishable state.

Also, the confirmation check box is a field into which the user inputs a check in the case where the user visually confirms the OCR recognition result and concludes that no revision is necessary. In Fig. 14, the confirmation check box in the other item area 100c is checked. The confirmation check box for an other item may be checked automatically if the character recognition result has a high confidence level. This configuration saves the user from having to perform a check operation when the character recognition result of the other item has a high confidence level. Note that the confirmation check box is not automatically checked for a documentary item, even if the character recognition result has a high confidence level. With this configuration, by demanding user confirmation every time for the documentary items regardless of the confidence level of the character recognition result, the accuracy of the recognition results for the documentary items may be ensured.

The other item area 100c of the result display area 100A corresponds to the other item area 46c on the setting screen (see Fig. 11, for example), and in the example of Fig. 14, the other item area 100c contains "Total". The other item area 100c is provided with the same item name, field indicating the recognition result or the like, confidence level, and confirmation check box as the documentary item area 100a, but differs from the documentary item area 100a by not being provided with the documentary item icon image 146d.

Also, on the screen 140 illustrated in Fig. 14, a notification frame 161 for notifying the user is displayed. The notification frame 161 contains the following message: "The read result for the search item [Counterparty] is empty. Please check the form image and input the result." An OK button 161a is also displayed in the notification frame 161.

Note that, as illustrated in Fig. 14, either a "Form View" or a "List View" in the upper-left corner of the screen 140 may be selected for display. In Fig. 14, the "Form View" is selected and displayed. Additionally, the file name of the image data 150 is displayed below "Form View" .

Also, an instruction area 145 labeled "OK" is disposed in the lower-right corner of the screen 140. Like the instruction area 45 (see Fig. 5), the instruction area 145 is active when in an operable state, and inactive otherwise. In other words, by activating the instruction area 145 when all three items in the documentary item area 100a are acquired, an indication that it is possible to proceed to the next screen is displayed, and by deactivating the instruction area 145 when not all three items are acquired, an indication that it is not possible to proceed to the next screen is displayed.

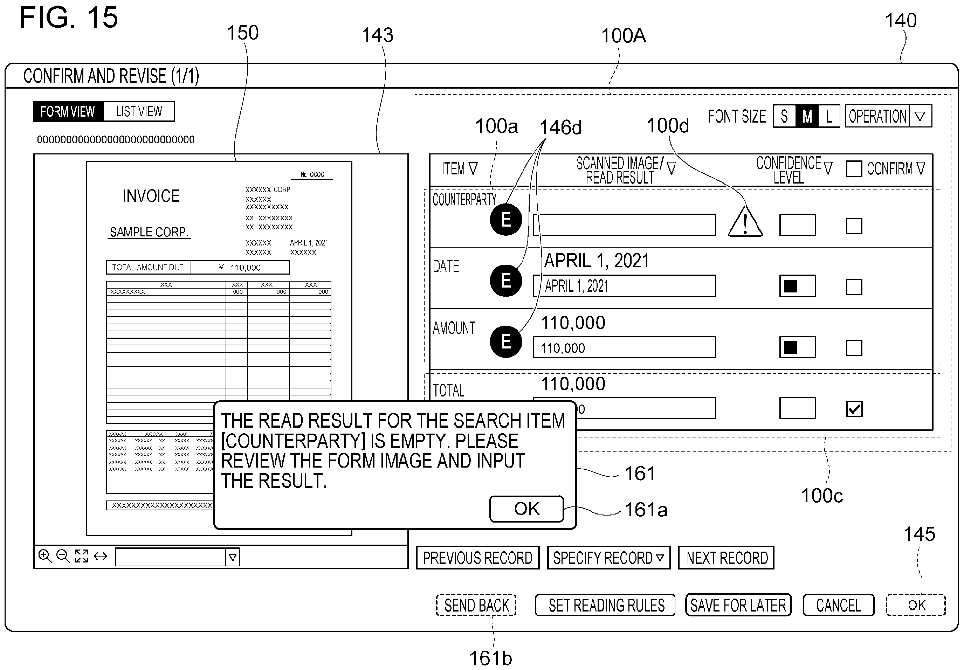

Fig. 15 is a diagram illustrating the screen 140 displayed in the case of a confirmation screen. Unlike Fig. 14, which illustrates a correctable situation, Fig. 15 illustrates a send-back situation. Note that since some portions of Fig. 15 are shared in common with Fig. 14, a description of the common portions may be reduced or omitted. The screen 140 illustrated in Fig. 15 represents a case where information corresponding to the search item "Counterparty" is not found in the form image, that is, the image data 150.

To handle such a case, it is conceivable to allow the user to click the alert icon image 100d and select an instruction from a menu display. The menu display includes a "Confirm form image and input result" item and a "Send back form image with no search item" item. The former is the case where the user inputs the search item manually without sending back the form image, while the latter is the case where the user sends back the form image without inputting the search item manually.

As another way of handling the above case, the user is made to operate a button in the case where the "Electronic Document Preservation Search Item Check" 44d (see Fig. 4) is ON. Note that in Fig. 15, a [Send Back] button 161b is inactive, but in the case described above, the [Send Back] button 161b is activated and displayed.

As yet another way of handling the above case, the following menu item is added to a menu display in the case where the "Electronic Document Preservation Search Item Check" 44d (see Fig. 4) is ON. Namely, a menu item that sends back the form image with no search item and automatically inputs the comment "Unsuitable for electronic document preservation" is added. Note that the standard menu display includes a "Flag deficient record" item and an "Input comment" item.

As yet another way of handling the above case, a menu display for processing the form image as a document not subject to electronic document preservation may be presented. For example, the menu display may include an "Output item recognition results excluding all search items (3)" item and an "Exclude this form from data outputted in output setting 'Electronic Document Preservation' mode".

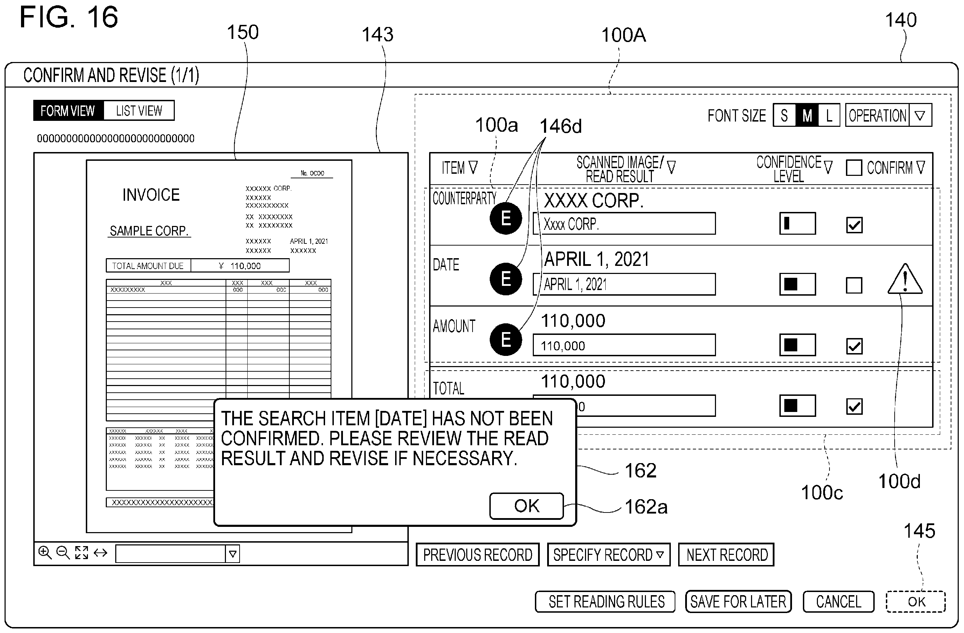

Fig. 16 is a diagram illustrating a screen 140 displayed in the case of a confirmation screen, and is a required confirmation situation in which each item in the documentary item area 100a is confirmed. Note that since some portions of Fig. 16 are shared in common with Fig. 14, a description of the common portions may be reduced or omitted. On the screen 140 illustrated in Fig. 16, among the "Counterparty", "Date", and "Amount" items in the documentary item area 100a, the confirmation check boxes for "Counterparty" and "Amount" are checked, but the confirmation check box for "Date" is not checked. Consequently, on the screen 140, the alert icon image 100d is displayed near the confirmation check box for "Date".

Also, on the screen 140 illustrated in Fig. 16, a notification frame 162 is displayed. The notification frame 162 contains the following message: "The search item [Date] has not been confirmed. Please review the read result and revise if necessary." An OK button 162a is also displayed in the notification frame 162.

The alert icon image 100d is displayed until the confirmation check box for "Date" is checked, and is no longer displayed after the confirmation check box for "Date" is checked. Also, while the alert icon image 100d is being displayed, the instruction area 145 is inactive and not operable by the user, as illustrated in Fig. 16. On the other hand, when the alert icon image 100d disappears, the instruction area 145 is activated and allowed to be operated by the user.

Furthermore, on the screen 140 illustrated in Fig. 16, the confidence levels in the documentary item area 100a are different for "Counterparty", "Date", and "Amount". Namely, the bar representing the confidence level of "Counterparty" extends horizontally to a length that is shorter than the bars for "Date" and "Amount", which indicates that the confidence level of "Counterparty" is lower than "Date" and "Amount".

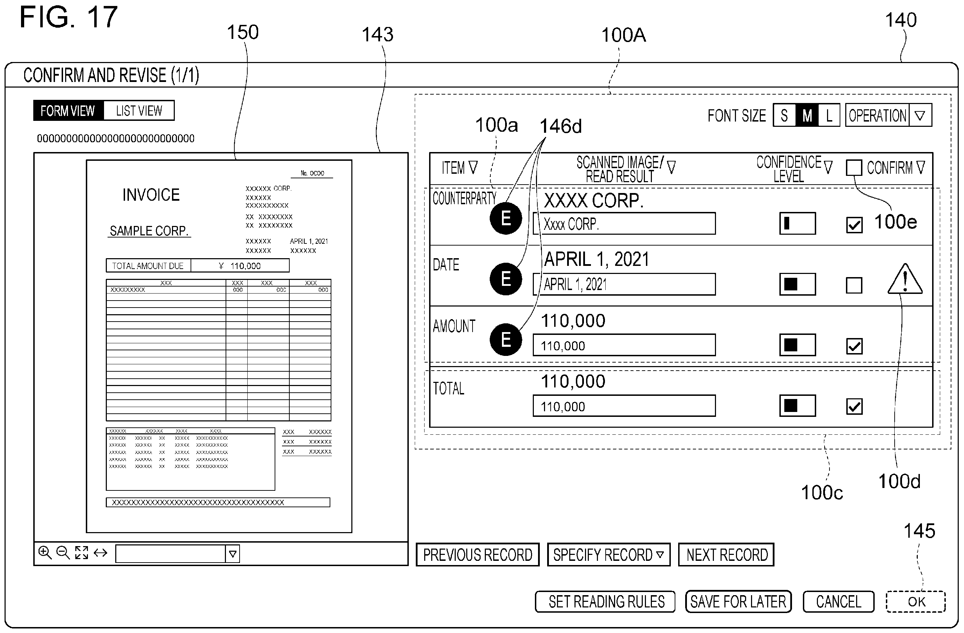

Fig. 17 is a diagram illustrating a screen 140 displayed in the case of a confirmation screen, and like the case of Fig. 16, is a required confirmation situation in which each item in the documentary item area 100a is confirmed. Note that since some portions of Fig. 17 are shared in common with Fig. 16, a description of the common portions may be reduced or omitted. Like the case of Fig. 15, in the documentary item area 100a of the screen 140 illustrated in Fig. 17, "Counterparty" and "Amount" are checked but "Date" is not checked, and the alert icon image 100d is displayed. Note that on the screen 140 illustrated in Fig. 17, the notification frame 162 that was displayed in Fig. 16 is not displayed. This is because the user has pressed the OK button 162a in the notification frame 162 and the display has disappeared.

A check all element 100e for checking all of the confirmation check boxes at once on the screen 140 illustrated in Fig. 17 exists, but a check operation performed on the check all element 100e is ignored for the confirmation check boxes in the documentary item area 100a. In other words, even if the user performs an operation of inputting a check into the check all element 100e, the confirmation check boxes in the documentary item area 100a are not checked. Consequently, removing the display of alert icon image 100d demands that the user perform a check operation on the relevant confirmation check box for "Date" rather than a check operation on the check all element 100e. By controlling the display in this way, the documentary items are confirmed reliably.

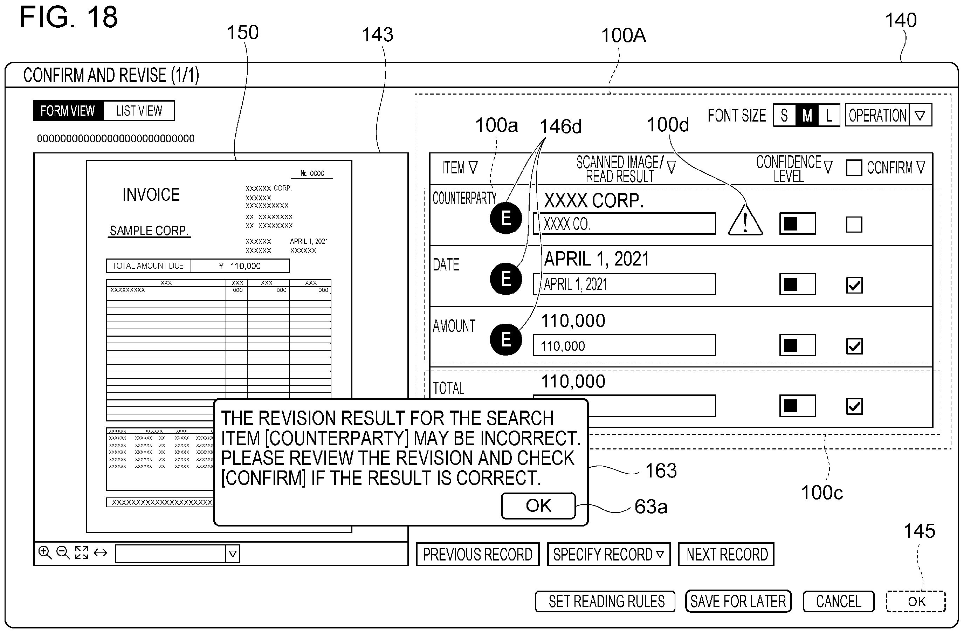

Fig. 18 is a diagram illustrating a screen 140 displayed in the case of a confirmation screen, and is a situation in which the items in the documentary item area 100a are revised. On the screen 140 illustrated in Fig. 18, the alert icon image 100d is displayed for "Counterparty" in the documentary item area 100a. The alert icon image 100d is displayed because the user has inputted incorrect information into the lower portion of the field indicating the recognition result or the like. This situation has occurred because although "XXXX Corp." is displayed as the scan image in the upper portion of the field indicating the recognition result or the like, the read result is "Xxxx Corp." (see Fig. 17) with a low confidence level (see also Fig. 17), and the user has discovered that the read result for "Counterparty" is incorrect. Accordingly, the user attempted to revise "xxx" to "XXX". However, as illustrated in the lower portion of the field indicating the recognition result or the like in Fig. 18, the user accidentally deleted "rp" when making the revision. As a result, the initial result "Xxxx Corp." has been incorrectly revised to "XXXX Co." For this reason, a notification frame 163 contains the following message: "The revision result for the search item [Counterparty] may be incorrect. Please review the revision and check [Confirm] if the result is correct." In this way, content inputted by the user in the documentary item area 100a is also validated automatically. On the other hand, a configuration is also possible in which content inputted by the user in the documentary item area 100a is not validated automatically.

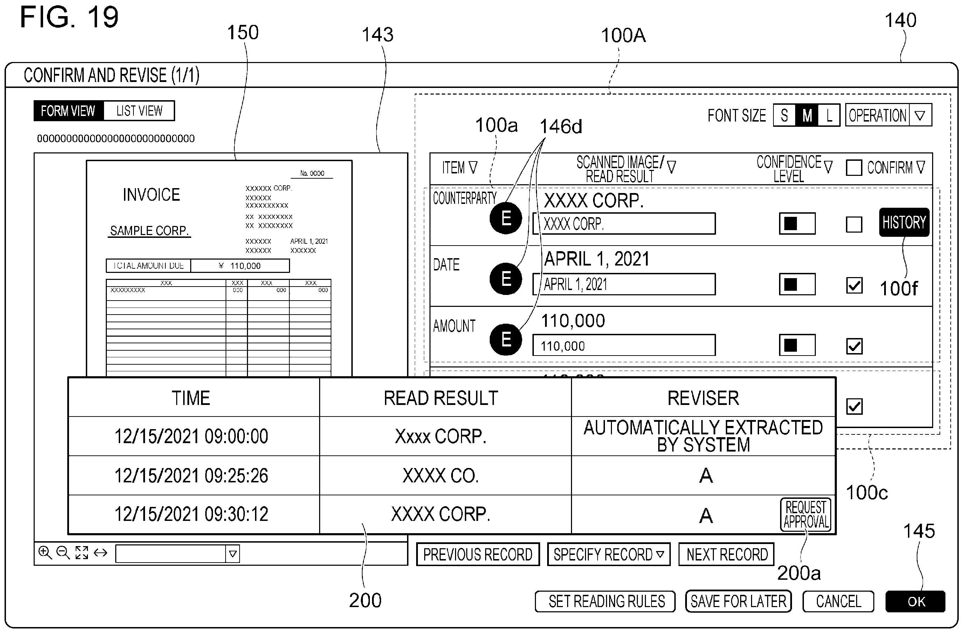

Next, a display of a revision history on the confirmation screen will be described. Fig. 19 is a diagram illustrating the screen 140 displayed in the case of a confirmation screen, and represents a case where a revision history is displayed. On the screen 140 illustrated in Fig. 19, a revision history 200 is displayed. The revision history 200 is displayed if a history button 100f disposed in the documentary item area 100a is pressed. If a portion of the documentary item area 100a is revised, the history button 100f is displayed at a position corresponding to the revised portion.

The revision history 200 includes a "Time" that indicates the revision time, a "Read Result" that indicates the OCR recognition result, input result, or the like, and a "Reviser" that indicates the person who made the revision. In the revision history 200, revisions are arranged in a time series from top to bottom. Consequently, the revision content at the bottom is the most recent. Note that the revision content at the top corresponds to the revision illustrated in Fig. 18 described above.

Described in further detail, a request approval button 200a is displayed in the field of the most recent revision content. The request approval button 200a is for requesting approval from a person who approves revisions. In this way, in the case where the user reviews the read content according to the display in the upper portion of the field indicating the recognition result or the like and revises the content in the lower portion of the same field, the request approval button 200a for confirming the revised content is displayed together with a history of the revision.

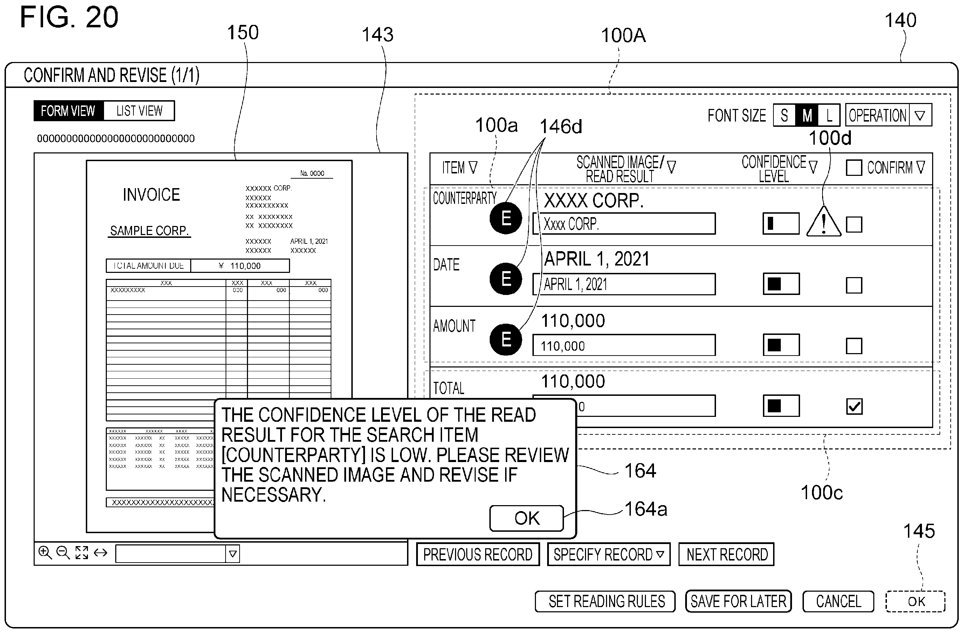

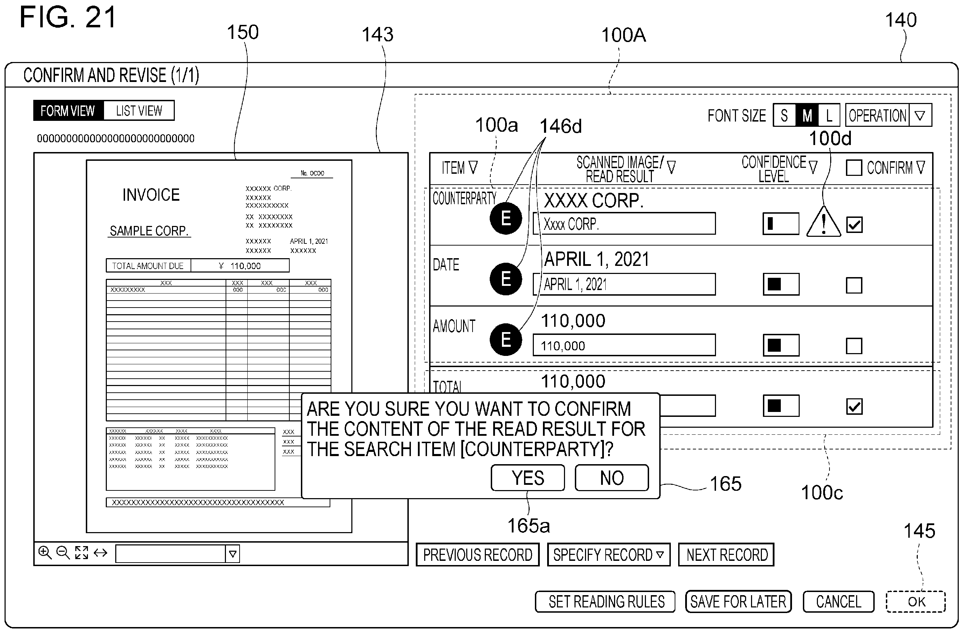

Next, Figs. 20 to 22 will be used to describe the display of a feedback notification according to confidence level on the confirmation screen. Here, the feedback notification according to confidence level prompts the user to confirm the extracted image and make a revision where appropriate in the case where the reading process is performed normally but the confidence level is low. Figs. 20 and 21 are diagrams illustrating the screen 140 displayed in the case of a confirmation screen, and represent a notification example 1 in which a feedback notification is provided. Figs. 20 and 21 are illustrated sequentially, and in the notification example 1, Fig. 21 is displayed after Fig. 20. On the screen 140 illustrated in Fig. 20, the alert icon image 100d is displayed because the confidence level of "Counterparty" in the documentary item area 100a is lower than a predetermined threshold value. In this way, when not all three items in the documentary item area 100a are acquired, the alert icon image 100d is disposed as a display indicating that "Counterparty" has not been acquired. Note that since the confidence levels of "Date" and "Amount" in the documentary item area 100a are higher than the predetermined threshold value, the alert icon image 100d is not displayed for those items.

Also, on the screen 140 illustrated in Fig. 20, a notification frame 164 is displayed. A notification frame 164 contains the following message: "The confidence level of the read result for the search item [Counterparty] is low. Please review the scanned image and revise if necessary." An OK button 164a is also displayed in the notification frame 164. If the user presses the OK button 164a, the screen display changes to the screen 140 illustrated in Fig. 21.

On the screen 140 illustrated in Fig. 21, if the user inputs a check into the confirmation check box for "Counterparty" in the documentary item area 100a, a notification frame 165 containing the message "Are you sure you want to confirm the content of the read result for the search item [Counterparty]?" is displayed. If the user presses a button 165a displayed in the notification frame 165, the alert icon image 100d disappears. Note that although the documentary item area 100a and the other item area 100c are displayed on the screen 140 illustrated in Fig. 21, the screen display is not limited thereto, and the display may also be controlled so that the other item area 100c not subject to user operations is not displayed.

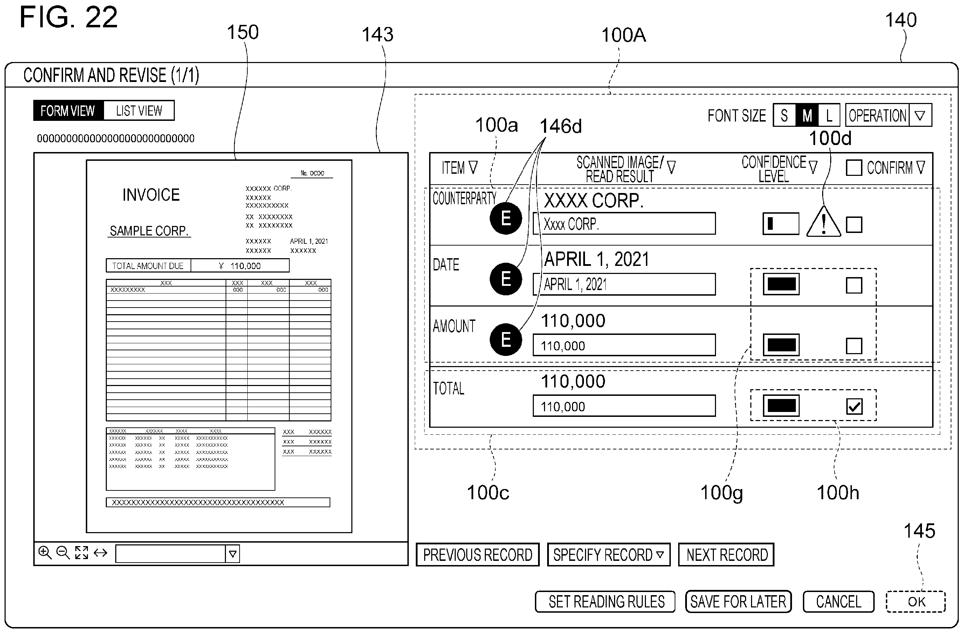

Figs. 22 is a diagram illustrating the screen 140 displayed in the case of a confirmation screen, and represents a notification example 2 in which a feedback notification is provided. The screen 140 illustrated in Fig. 22 is displayed after Fig. 20 in the notification example 1, and is displayed instead of Fig. 21. On the screen 140 illustrated in Fig. 22, as indicated by a dashed-line frame 100g, the confidence levels of "Date" and "Amount" in the documentary item area 100a are higher than a predetermined threshold value, and the alert icon image 100d is not displayed. However, user confirmation is demanded not only for "Counterparty" but also for "Date" and "Amount" in the documentary item area 100a, and the user is made to perform operations for inputting a check into the confirmation check boxes.

On the other hand, for "Total" in the other item area 100c, if the confidence level is higher than a predetermined threshold value, the user operation for inputting a check into the confirmation check box is skipped. In other words, as indicated by the dashed-line frame 100h, the display of the confirmation check box for "Total" is controlled such that a check appears automatically and not in response to a user operation if the confidence level is high. Note that instead of the above display control, the confirmation check box for "Total" may not be displayed, or confirmation and revision may be skipped.

Herein, the image data 42a in the reduced display area 42, the image data 50 in the enlarged display area 43, and the image data 150 in the enlarged display area 143 are examples of a read image. The three items "Counterparty", "Date", and "Amount" in the documentary item area 46a (see Fig. 5, for example) and the three items "Counterparty", "Date", and "Amount" in the documentary item area 100a of the result display area 100A (see Fig. 14, for example) are examples of a documentary item to be treated as a search condition according to the Electronic Books and Documents Preservation Act. Also, the "Total" item in the other item areas 46c and 100c (see Figs. 11 and 14, for example) is an example of an other item, that is, an item other than a documentary item. Also, the screen 40 (see Fig. 11, for example) and the screen 140 (see Fig. 14, for example) are examples of a "screen indicating an item for confirming an extracted item". Also, the documentary item icon images 46d and 146d (see Figs. 5 and 14, for example) are an example of "displaying a documentary item so as to be distinguishable from an other item". Also, the alert icon image 100d is an example of a "display indicating that a documentary item has not been acquired" (see Fig. 14, for example) and an example of a "notification to a user regarding a confidence level with respect to a documentary item" (see Fig. 20, for example). Also, the revision history 200 (see Fig. 19) is an example of a history of revision, and the request approval button 200a (see Fig. 19) is an example of an element for performing a confirmation operation on revised content.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing device comprising:
a processor configured to:
acquire a read image;
extract items from the acquired read image through character recognition, the items including a documentary item to be treated as a search condition according to the Electronic Books and Documents Preservation Act; and
control a display of a screen indicating corresponding items for confirming the extracted items such that the documentary item is distinguishable from an other item, that is, an item other than the documentary item among the corresponding items.

2. The information processing device according to Claim 1, wherein the processor is configured to control the display of the screen indicating the corresponding items to indicate whether the screen is changeable from the screen indicating the corresponding items to a next screen, depending on a state of the documentary item.

3. The information processing device according to Claim 2, wherein the processor is configured to control the display to indicate that the screen is changeable to the next screen in a case where the documentary item is acquired.

4. The information processing device according to Claim 2, wherein the processor is configured to control the display to indicate that the screen is not changeable to the next screen in a case where the documentary item is not acquired.

5. The information processing device according to Claim 4, wherein the processor is configured to control the display such that in a case where the documentary item is not acquired, an indication of the unacquired documentary item is displayed.

6. The information processing device according to Claim 1, wherein the processor is configured to control the display such that in a case where a user confirms content read in correspondence with the documentary item, the documentary item and the other item are displayed in a distinguishable way.

7. The information processing device according to Claim 6, wherein:
in a case where the user reviews the content of the documentary item, the processor is configured to prompt the user to perform a confirmation operation on a candidate determined by a confidence level of a result of the character recognition; and
in a case where the user reviews the content of the other item, the processor is configured to: allow the user to skip the confirmation operation for a candidate determined by the confidence level; and prompt the user to perform an operation in a case of revising the content.

8. The information processing device according to Claim 6, wherein:
in a case where the user reviews the content of the documentary item, the processor is configured to notify the user about a confidence level of a result of the character recognition if the confidence level of the documentary item is lower than a predetermined value; and
in a case where the user reviews the content of the other item, the processor is configured to not notify the user about a confidence level of a result of the character recognition, even if the confidence level of the other item is lower than a predetermined value.

9. The information processing device according to Claim 1, wherein in a case where the user reviews content read in correspondence with the documentary item and revises the content, the processor is configured to display a history of revision and an element for confirming the revised content.

10. The information processing device according to Claim 1, wherein in a case where content read in correspondence with the items is outputted, the processor is configured to disallow removal of the documentary item from the output.

11. The information processing device according to Claim 1, wherein the processor is configured to allow the user to toggle whether the documentary item is displayed so as to be distinguishable from the other item.

12. The information processing device according to Claim 11, wherein, in a case where the display is toggled to the non-distinguishable state, if the user toggles the display to the distinguishable state after confirming the content of the documentary item and the other item, the processor is configured to retain information about a user operation performed on the other item, but not retain information about a user operation performed on the documentary item.

13. An information processing method comprising:
acquiring a read image;
extracting items from the acquired read image through character recognition, the items including a documentary item to be treated as a search condition according to the Electronic Books and Documents Preservation Act; and
controlling a display of a screen indicating corresponding items for confirming the extracted items such that the documentary item is distinguishable from an other item, that is, an item other than the documentary item among the corresponding items.

14. A program causing a computer to execute a process for information processing, the process comprising:
acquiring a read image;
extracting items from the acquired read image through character recognition, the items including a documentary item to be treated as a search condition according to the Electronic Books and Documents Preservation Act; and
controlling a display of a screen indicating corresponding items for confirming the extracted items such that the documentary item is distinguishable from an other item, that is, an item other than the documentary item among the corresponding items.
